# EUROPÄISCHE PATENTANMELDUNG

(11) **EP 2 827 247 A1**
(43) Veröffentlichungstag der Anmeldung: **21.01.2015**
(21) Anmeldenummer: 13290168.7
(22) Anmeldetag: 16.07.2013
(51) Int. Cl.: G06F 9/52

(54) **Verfahren zum Synchronisieren von Zustandswechseln in Mehrkernrechnern eingebetteter Systeme**

(71) Anmelder: Continental Automotive GmbH, 30165 Hannover (DE)
(72) Erfinder: Claraz, Denis, 31300 Toulouse (FR); Mader, Ralph, 93077 Bad Abbach (DE)

(57) **Zusammenfassung**

Die Erfindung betrifft ein Verfahren zum Steuern eines Steuergerätes eines Kraftfahrzeuges, welches durch einen Mehrkernprozessor gebildet wird und wobei Funktionen des Steuergeräts jeweils durch einen Prozessorkern des Mehrkernkompressors bereitgestellt und durch auf den Prozessorkernen ausgeführte Programme realisiert werden, wobei das Verfahren (30) folgende Schritte aufweist:
- Detektieren einer Zustandsänderung einer Einrichtung des Kraftfahrzeuges (31);
- Herunterfahren der auf den Prozessorkernen ausgeführten Programme entsprechend einer Zeitkritizität der durch die Prozessorkerne des Mehrkernprozessors bereitgestellten Funktionen(32);
- Synchrones Durchführen eines Initialisierungsprozesses auf Basis der detektierten Zustandsänderung auf allen Prozessorkernen (33);
- Wiederhochfahren der auf den Prozessorkernen ausgeführten Programme (34).

## Beschreibung

Die Erfindung betrifft ein Verfahren zum Steuern eines Steuergerätes eines Kraftfahrzeuges sowie ein Steuergerät, wobei das Steuergerät durch einen Mehrkernprozessor gebildet wird und Funktionen des Steuergeräts jeweils durch einen Prozessorkern des Mehrkernprozessors bereitgestellt werden und wobei ein effizienter Initialisierungsprozess der auf den Prozessorkernen laufenden Software über die Prozessorkerne hinweg gewährleistet wird.

Durch die zunehmende Integration von Softwaresystemen in Kraftfahrzeugen sind gewöhnliche Kraftfahrzeuge zunehmend mit einer Vielzahl von elektronischen Komponenten und Funktionen ausgestattet. Steuergeräte in Kraftfahrzeugen werden dabei dazu genutzt, die verschiedenen Funktionen des Kraftfahrzeuges auszuführen. Sie umfassen dabei für gewöhnlich einen Prozessor, auf dem ein entsprechendes Steuerprogramm ausgeführt wird.

Weiter wird in der Automobilentwicklung mehr und mehr darauf hingearbeitet, den Antriebsstrang zu elektrifizieren. Aufgrund des Mehrbedarfs an Rechenleistung, im speziellen bei Motorsteuerungen, liegt dabei der Fokus auf dem Einsatz von Mehrkernprozessoren. Dieser resultiert beispielsweise daraus, dass aufgrund höherer Abgasanforderungen die Verbrennungsprozesse besser gesteuert werden müssen.

Der Mehrverbrauch an Rechenleistung konkurriert dabei mit dem Bestreben die Verlustleitung der Geräte zu senken und die Kosten gering zu halten. Die Herausforderung hierbei ist ein Programm, beispielsweise eine Motorsteuerungssoftware auf mehreren Kernen des Mehrkernprozessors zur Ausführung zu bringen. Dies erfordert unter anderem auch die Synchronisation von Zustandsübergängen über Kerngrenzen hinweg.

Aus der Druckschrift WO 2013/000562 A1 ist ein Kraftfahrzeug mit einer Vielzahl von Betriebskomponenten und mit einer Vielzahl von Steuergeräten jeweils zum Ansteuern zumindest einer der Betriebskomponenten bekannt, wobei die Steuergeräte jeweils durch Prozessorkerne zumindest eines Mehrkernprozessors gebildet sind, welche die Funktionen des Steuergeräts bereitstellen.

Mehrkernprozessoren haben den Vorteil, dass die Kosten für den Einsatz eines einzelnen Chips mit mehreren Ressourcen häufig geringer sind als bei mehreren einzelnen Chips. So kann mit der gleichen Anzahl an Chips eine vervielfachte Rechenleistung erzielt werden. Auch können durch die verschiedenen Prozessorkerne des Mehrkernprozessors mehrere Funktionen bereitgestellt werden. Als nachteilig erweist sich bei der Verwendung von Mehrkernprozessoren insbesondere für die Steuergeräte eines Kraftfahrzeuges jedoch, dass Zustandsänderungen einer Einrichtung des Kraftfahrzeuges, welche dazu führen, das Daten neu eingesetzt, das heißt Variablen neu initialisiert werden müssen, von den einzelnen Prozessorkernen des Mehrkernprozessors zu unterschiedlichen Zeiten registriert werden können. Auch können Situationen auftreten, das ein Steuerprogram eines Prozessorkerns abhängig von der Ausgangsgröße eines anderen Prozessorkerns ist und folglich erst zeitlich verzögert auf die Zustandsänderung reagieren kann, was dazu führen kann, dass unterschiedliche Funktionen eines Steuergerätes zum selben Zeitpunkt unterschiedliche Eingangsgrößen derselben Komponente des Kraftfahrzeuges auswerten können, was wiederum zu kritischen Situationen führen kann.

Aufgabe der vorliegenden Erfindung ist es, ein Verfahren zum Steuern eines Steuergerätes eines Kraftfahrzeuges anzugeben, welches einfach ausgestaltet ist und mit welchem der Initialisierungsprozess bei einer Zustandsänderung einer Einrichtung des Kraftfahrzeuges erheblich verbessert werden kann.

Gelöst wird diese Aufgabe durch den Gegenstand der unabhängigen Ansprüche. Weitere vorteilhafte Weiterbildungen sind Gegenstand der abhängigen Ansprüche.

Gemäß einer Ausführungsform der Erfindung wird diese Aufgabe gelöst durch ein Verfahren zum Steuern eines Steuergerätes eines Kraftfahrzeuges, welches durch einen Mehrkernprozessor gebildet wird und wobei Funktionen des Steuergeräts jeweils durch einen Prozessorkern des Mehrkernprozessors bereitgestellt und durch auf den Prozessorkernen ausgeführte Programme realisiert werden. Das Verfahren weist dabei folgende Schritte auf: Zunächst wird eine Zustandsänderung einer Einrichtung des Kraftfahrzeuges detektiert und auf den Prozessorkernen ausgeführte Programme entsprechend einer Zeitkritizität der durch die Prozessorkerne bereitgestellten Funktionen heruntergefahren sowie anschließend ein Initialisierungsprozess auf Basis der detektierten Zustandsänderung auf allen Prozessorkernen synchron durchgeführt, falls eine Zustandsänderung einer Einrichtung des Kraftfahrzeuges detektiert wurde. Abschließend werden die auf den Prozessorkernen des Mehrkernprozessors ausgeführten Programme wiederhochgefahren.

Grundgedanke ist somit, die Vorteile von Mehrkernprozessoren zu nutzen, insbesondere die üblicherweise in einem Kraftfahrzeug vorhandenen Steuergeräte durch Mehrkernprozessoren zu ersetzen, welche die Funktionen des jeweiligen Steuergerätes bereitstellen, und dabei einen Initialisierungsprozess der Prozessorkerne zu parallelisieren.

Ein derartiges Verfahren hat den Vorteil, dass dieses einfach ausgestaltet ist und mit diesem der Initialisierungsprozess bei einer Zustandsänderung einer Einrichtung des Kraftfahrzeuges erheblich verbessert werden kann. So werden für gewöhnlich auf jedem Prozessorkern eines Mehrkernprozessors Teile eines entsprechendes Steuerprogramms betrieben, mit welchem Eingangsgrößen erfasst werden können, die von Sensoren des Kraftfahrzeuges bereitgestellt werden oder beispielsweise durch Eingabe eines Benutzers des Kraftfahrzeuges erzeugt werden. Anhand dieser Eingangsgröße ermittelt das Steuerprogramm dann eine Ausgangsgröße, mittels welcher eine Betriebskomponente des Kraftfahrzeuges angesteuert werden kann. Da hierbei vorgesehen ist, einen Initialisierungsprozess auf allen Prozessorkernen synchron durchzuführen, während die durch die einzelnen Prozessorkerne realisierten Funktionen des Steuergerätes heruntergefahren werden, kann gewährleistet werden, dass die Initialisierungsfunktionen auf den einzelnen Prozessorkernen des Mehrkernprozessors parallelisiert werden. Hierdurch kann die Zeitdauer, über welche derartige Initialisierungsfunktionen insgesamt ausgeführt werden, und insgesamt die Zeitdauer, bis zu welcher alle Prozessorkerne des Steuergerätes eine Zustandsänderung einer Einrichtung des Kraftfahrzeuges verarbeitet haben und auf diese entsprechend reagieren können, vereinheitlicht und erheblich verkürzt werden. So wird gewährleistet, dass unterschiedliche Prozessorkerne des Steuergerätes zum selben Zeitpunkt keine unterschiedlichen Eingangsgrößen derselben Betriebsgröße des Kraftfahrzeuges auswerten, wodurch Kollisionen der einzelnen Funktionen des Steuergerätes untereinander vorgebeugt werden kann.

Da das Herunterfahren der auf den Prozessorkernen ausgeführten Programme dabei weiter entsprechend der Zeitkritizität der durch die Prozessorkerne bereitgestellten Funktionen gesteuert wird, kann weiter gewährleistet werden, dass Funktionen des Steuergerätes, welche unmittelbar oder in kurzer Zeit ausgeführt werden müssen, noch aktiviert werden, bevor das entsprechende Programm heruntergefahren wird. So arbeiten Steuergeräte in diskreten Zeitintervallen. Die Länge eines solchen Zeitintervalls kann dabei fest oder ereignisabhängig definiert sein. Die Aufgabe der Steuergeräte liegt dabei darin, alle Berechnungs-und Regelaufgaben innerhalb der zur Verfügung stehenden Zeit zu erledigen.

Weiter kann durch das Parallelisieren der Initialisierungsfunktionen der Bedarf an Speicherplatz in einem Puffer, das heißt in einem Zwischenspeicher, in welchem Variablen oder Funktionen abgelegt sind, die bei einer Zustandsänderung einer Einrichtung des Kraftfahrzeuges überarbeitet beziehungsweise upgedatet werden müssen, reduziert werden, so dass durch das Verfahren auch die Anforderung in Bezug auf Rechenzeit als auch auf Speicherplatzanforderungen optimiert werden kann.

Der Schritt des Detektierens einer Zustandsänderung einer Einrichtung des Kraftfahrzeuges kann dabei ein Detektieren eines Betätigens eines Zündschalters des Kraftfahrzeuges umfassen. Zündschalter in gewöhnlichen Kraftfahrzeugen sind als elektrische Kombinationskontakte ausgebildet und dienen dazu, die elektrischen Funktionen einer elektrischen Zündung des Kraftfahrzeuges zu schalten. Hierdurch können in vorteilhafter Weise Zustandsänderungen eines Motors des Kraftfahrzeuges detektiert werden, insbesondere ob dieser gestartet beziehungsweise abgeschaltet wurde. Ferner können aber auch die Daten weiterer Sensoren eines Kraftfahrzeuges zum Detektieren einer Zustandsänderung des Motors oder einer weiteren Einrichtung des Kraftfahrzeuges verwendet werden.

Auch kann der Schritt des Herunterfahrens der auf den Prozessorkernen ausgeführten Programme ein Verzögern des Ausführens der durch die Prozessorkerne bereitgestellten Funktionen, welche aktiviert werden, umfassen. So ist bekannt, Prozessorkerne eines Mehrkernprozessors, das heißt die entsprechenden Funktionen eines Steuergerätes, welche aktuell nicht zum Ansteuern von Betriebskomponenten benötigt werden, in einen Ruhemodus beziehungsweise in einen Stand-by-Modus zu schalten, in welchem sie einen geringeren Energie- beziehungsweise Leistungsbedarf aufweisen, wodurch weiter Energie eingespart werden kann. Diese Funktion kann hierbei genutzt werden, um die Zeitdauer zu reduzieren bis auf einzelne Funktionen des Steuergerätes nach einem abgeschlossenen Initialisierungsprozess wieder zugegriffen werden kann, das heißt diese wieder zur Verfügung stehen. Da die Realisierung der durch die einzelnen Prozessorkerne bereitgestellten Funktionen dabei auf der detektierten Zustandsänderung basiert, kann die bis zum Abschluss des Initialisierungsprozesses benötigte Zeit weiter vermindert werden.

Gemäß einer Ausführungsform werden die durch die Prozessorkerne bereitgestellten Funktionen dabei entsprechend ihrer Zeitkritizität in eine erste Gruppe mit geringer Zeitkritizität, eine zweite Gruppe mit mittlerer Zeitkritizität und eine dritte Gruppe mit hoher Zeitkritizität unterteilt. Die Signale von Funktionen von Steuergeräten eines Kraftfahrzeuges werden für gewöhnlich in zeitdiskrete, wertediskrete oder winkelsynchrone Signale unterteilt, wobei die Signale bis hin zu einem nächsten Abtastzyklus einer Eingangsgröße konstant gehalten werden. Gemäß dem vorliegenden Verfahren kann dabei ein Initialisierungsprozess des Steuergerätes bei einer Zustandsänderung einer Einrichtung des Kraftfahrzeuges, das heißt einer Änderung der Eingangsgröße, erheblich verbessert werden. Weiter arbeiten die Steuergeräte eines Kraftfahrzeuges jedoch in diskreten Zeitintervallen. Die Länge eines solchen Zeitintervalls kann dabei fest, beispielsweise 10 Millisekunden, oder ereignisabhängig, beispielsweise eine Motordrehung, definiert sein. Da die Aufgabe der Steuergeräte dabei darin liegt, alle Berechnungs- und Regelaufgaben innerhalb des jeweiligen Zeitintervalls zu erledigen, kann durch eine derartige Unterteilung in einfacher Weise vorteilhaft gewährleistet werden, dass die Funktionen des Steuergerätes, welche unmittelbar oder innerhalb eines kurzen Zeitraums ausgeführt werden müssen, durch den Initialisierungsprozess nicht beeinträchtigt werden.

Der Schritt des Herunterfahrens der auf den Prozessorkernen ausgeführten Programme entsprechend der Zeitkritizität der durch die Prozessorkerne bereitgestellten Funktionen kann dabei folgende Schritte aufweisen: So werden die Programme, welche Funktionen der ersten Gruppe realisieren, das heißt Funktionen mit geringer Zeitkritizität, unmittelbar heruntergefahren. Weiter werden die Funktionen der zweiten Gruppe, das heißt Funktionen mit mittlerer Zeitkritizität, nochmals ausgeführt, falls diese zum Zeitpunkt des Detektierens der Zustandsänderung erneut aktiviert werden und anschließend die Programme, welche diese Funktionen realisieren, heruntergefahren. Andernfalls werden die Programme, welche die Funktionen der zweiten Gruppe realisieren, ebenfalls unmittelbar Herunterfahren, falls die entsprechenden Funktionen nicht erneut aktiviert werden. Die Funktionen der dritten Gruppe, das heißt die Funktionen mit hoher Zeitkritizität, werden dabei nach Detektieren einer Zustandsänderung einer Einrichtung des Kraftfahrzeuges erneut ausgeführt, bevor die Programme, welche die Funktionen der dritten Gruppe realisieren, heruntergefahren werden. Somit kann gewährleistet werden, dass die Funktionen des Steuergerätes, insbesondere die Funktionen mit mittlerer Zeitkritizität, falls diese erneut aktiviert werden, sowie die Funktionen mit hoher Zeitkritizität noch einmal aktiviert werden, bevor die entsprechenden auf den Prozessorkerne des Mehrkernprozessors ausgeführten Programme heruntergefahren werden und somit durch den Initialisierungsprozess nicht beeinträchtigt werden, ohne dass dies zu unhaltbaren Zuständen in Bezug auf die Rechenzeit als auch in Bezug auf die Speicherplatzanforderungen führt. So kann beispielsweise gewährleistet werden, dass ein Kommunikationstask zwischen einzelnen Steuergeräten eines Kraftfahrzeuges oder eine Ventilhubsteuerung durch den Initialisierungsprozess nicht beeinträchtigt werden.

Auch kann der Schritt des Wiederhochfahrens der auf den Prozessorkernen ausgeführten Programme dabei weiter folgende Schritte aufweisen: So werden zunächst die Programme, welche Funktionen der dritten Gruppe realisieren, das heißt Funktionen mit hoher Zeitkritizität, sowie anschließend die Programme, welche Funktionen der ersten und der zweiten Gruppe realisieren, wiederhochgefahren. Hierdurch wird weiter erreicht, dass die Funktionen der dritten Gruppe, welche unmittelbar oder in kurzer Zeit aktiviert werden müssen, beispielsweise ein Kommunikationstask oder eine Ventilhubsteuerung, unmittelbar nach Beendigung des Initialisierungsprozesses wieder zur Verfügung stehen, wodurch in vorteilhafter Weise weiter gewährleistet wird, dass die Funktionen des Steuergerätes durch den Initialisierungsprozess nicht beeinträchtigt werden.

Mit einer weiteren Ausführungsform der Erfindung wird auch ein Steuergerät eines Kraftfahrzeuges, welches durch einen Mehrkernprozessor gebildet wird und wobei Funktionen des Steuergeräts durch Prozessorkerne des Mehrkernprozessors bereitgestellt und durch auf den Prozessorkernen des Mehrkernprozessors ausgeführte Programme realisiert werden, angegeben. Das Steuergerät weist dabei weiter eine Empfangseinheit zum Empfangen von Informationen über eine Zustandsänderung einer Einrichtung des Kraftfahrzeuges auf. Auch umfasst das Steuergerät ein erstes Mittel zum Herunterfahren der auf den Prozessorkernen des Mehrkernprozessors ausgeführten Programme entsprechend einer Zeitkritizität der durch die Prozessorkerne bereitgestellten Funktionen, falls Informationen über eine Zustandsänderung einer Einrichtung des Kraftfahrzeuges empfangen wurden, ein zweites Mittel zum synchronen Durchführen eines Initialisierungsprozesses auf Basis der detektierten Zustandsänderung auf allen Prozessorkernen, falls Informationen über eine Zustandsänderung einer Einrichtung des Kraftfahrzeuges empfangen wurden, sowie ein drittes Mittel zum Wiederhochfahren der auf den Prozessorkernen ausgeführten Programme nach Beendigung des Initialisierungsprozesses.

Ein derartiges Steuergerät hat den Vorteil, dass dieses einfach ausgestaltet ist, wobei der Initialisierungsprozess bei einer Zustandsänderung einer Einrichtung des Kraftfahrzeuges erheblich verbessert werden kann. Dabei wird das Steuergerät durch einen Mehrkernprozessor gebildet, das heißt ein üblicherweise in einem Kraftfahrzeug vorhandenes Steuergerät durch die Prozessorkerne eines Mehrkernprozessors ersetzt, welche die Funktionen des Steuergerätes bereitstellen. Hierbei werden für gewöhnlich auf jedem Prozessorkern eines Mehrkernprozessors Teile eines entsprechendes Steuerprogramms betrieben, mit welchen Eingangsgrößen erfasst werden, die von Sensoren des Kraftfahrzeuges bereitgestellt oder beispielsweise durch Eingabe eines Benutzers des Kraftfahrzeuges erzeugt werden. Anhand dieser Eingangsgröße ermittelt das Steuerprogramm dann eine Ausgangsgröße, mittels welcher eine Betriebskomponente des Kraftfahrzeuges angesteuert werden kann. Da das Kraftfahrzeug dabei derart ausgebildet ist, einen Initialisierungsprozess auf allen Prozessorkernen synchron durchzuführen, während die durch die einzelnen Prozessorkerne realisierten Funktionen des Steuergerätes heruntergefahren werden, kann gewährleistet werden, dass die Initialisierungsfunktionen auf den einzelnen Prozessorkernen des Mehrkernprozessors parallelisiert werden. Dabei kann die Zeitdauer, über welche derartige Initialisierungsfunktionen insgesamt ausgeführt werden, und insgesamt die Zeitdauer, bis zu welcher alle Prozessorkerne des Steuergerätes eine Zustandsänderung einer Einrichtung verarbeitet haben und auf diese entsprechend reagieren können, vereinheitlicht und erheblich verkürzt werden. So wird gewährleistet, dass unterschiedliche Funktionen desselben Steuergerätes zum selben Zeitpunkt keine unterschiedlichen Eingangsgrößen derselben Betriebsgröße des Kraftfahrzeuges auswerten, wodurch Kollisionen der einzelnen Funktionen des Steuergerätes untereinander vorgebeugt werden kann.

Da das Steuergerät weiter ausgebildet ist, das Herunterfahren der auf den Prozessorkernen ausgeführten Programme dabei entsprechend einer Zeitkritizität der durch die Prozessorkerne bereitgestellten Funktionen zu steuern, kann weiter gewährleistet werden, dass Funktionen des Steuergerätes, welche unmittelbar oder in kurzer Zeit ausgeführt werden müssen, noch aktiviert werden können, bevor die entsprechenden Programme heruntergefahren werden. So arbeiten Steuergeräte in diskreten Zeitintervallen. Die Länge eines solchen Zeitintervalls kann dabei fest oder ereignisabhängig sein. Die Aufgabe der Steuergeräte liegt dabei darin, alle Berechnungs- und Regelaufgaben innerhalb der zur Verfügung stehenden Zeit zu erledigen.

Weiter kann durch das Parallelisieren der Initialisierungs-funktionen der Bedarf an Speicherplatz in einem Puffer, das heißt in einem Zwischenspeicher des Mehrkernprozessors, in welchem Variablen oder Funktionen abgelegt sind, die bei einer Zustandsänderung einer Einrichtung des Kraftfahrzeuges überarbeitet beziehungsweise upgedatet werden müssen, reduziert werden, so dass auch die Anforderungen in Bezug auf Rechenzeit als auch auf Speicherplatzanforderungen optimiert werden können.

Dabei werden das erste Mittel, das zweite Mittel sowie das dritte Mittel bevorzugt als Programmteile, welche auf den Prozessorkernen zur Ausführung kommen, realisiert. Ferner können die Funktionen der einzelnen Mittel aber auch durch weitere Software-und/oder Hardwarekomponenten realisiert werden.

Dabei können die einzelnen Prozessorkerne des Mehrkernprozessors an einen gemeinsamen Datenbus gekoppelt sein, um aus diesem Prozessordatenbus Datenwerte auszulesen. Auf diese Weise können Datenwerte besonders einfach zwischen den einzelnen Prozessorkernen und somit zwischen den einzelnen Funktionen des Steuergerätes ausgetauscht werden. Bevorzugt ist der Prozessordatenbus beziehungsweise die dazugehörige Prozessordatenleitung dabei ausgebildet, eine echtzeitfähige Kommunikation zwischen den einzelnen Prozessorkernen zu realisieren. Dabei wird durch den Prozessordatenbus eine solche Datenübertragungsrate ermöglicht, dass die Steuervorgänge der jeweiligen Funktionen in der dafür vorgegebenen Zeit sicher ausgeführt sowie entsprechend ihrer Zeitkritizität gesteuert werden können, oder der Initialisierungsprozess auf allen Prozessorkernen möglichst umgehend gestartet werden kann. Somit können die jeweiligen Betriebskomponenten besonders zuverlässig und schnell angesteuert werden.

Auch kann das erste Mittel weiter einen Speicher, in welchem Daten über die Zeitkritizität der Funktionen des Steuergerätes, welche durch die Prozessorkerne bereitgestellt werden, hinterlegt sind, umfassen. Die Signale von Funktionen eines Steuergerätes eines Kraftfahrzeuges werden für gewöhnlich in zeitdiskrete, wertdiskrete oder winkelsynchrone Signale unterteilt, wobei die Signale bis hin zu einem nächsten Abtastzyklus einer Ein-gangsgrößen konstant gehalten werden. Mittels derartiger hinterlegter Daten über die Zeitkritizität der Funktionen des Steuergerätes kann dabei ein Initialisierungsprozess der Steuergeräte bei einer Zustandsänderung einer Einrichtung des Kraftfahrzeuges, das heißt einer Änderung der Eingangsgröße, erheblich verbessert werden. Weiter arbeiten die Steuergeräte eines Kraftfahrzeuges in diskreten Zeitintervallen. Die Länge eines derartigen Zeitintervalls kann dabei fest, beispielsweise 10 Millisekunden, oder ereignisabhängig, beispielsweise eine Motordrehung, definiert sein. Da die Aufgabe der Steuergeräte dabei darin liegt, alle Berechnungs- und Regelaufgaben innerhalb des jeweiligen Zeitintervalls zu erledigen, kann in einfacher Weise und vorteilhaft gewährleistet werden, dass die Funktionen des Steuergerätes, welche unmittelbar oder innerhalb eines kurzen Zeitraums ausgeführt werden müssen, noch ausgeführt werden, bevor das entsprechende Programm heruntergefahren wird, und folglich durch den Initialisierungsprozess nicht beeinträchtigt werden. Vorteilhafterweise können die Daten über die Zeitkritizität der Funktionen des Steuergerätes dabei in einfacher Weise gruppenweise hinterlegt sein, beispielsweise unterteilt in eine erste Gruppe mit geringer Zeitkritizität, eine zweite Gruppe mit mittlerer Zeitkritizität und eine dritte Gruppe mit hoher Zeitkritizität.

Weiter kann das erste Mittel eine Steuereinheit, welche ausgebildet ist, ein Steuersignal zum Ausschalten der auf den Prozessorkernen ausgeführten Programme entsprechend der Zeitkritizität der durch die Prozessorkerne bereitgestellten Funktionen zu erzeugen, umfassen. Die Steuereinheit kann dabei beispielsweise als übergeordnete zentrale Steuereinheit vorgesehen sein, wobei dabei beispielsweise einer der Prozessorkerne des Mehrkernprozessors die Aufgabe dieser zentralen Steuereinheit übernimmt. Ebenso können mehrere Steuereinheiten dezentral vorliegen, beispielsweise kann auf mehreren oder jedem Prozessorkern eine entsprechende Steuereinheit vorgesehen sein. Die Funktion der jeweiligen Steuereinheit kann dabei durch ein Softwareprogramm ermöglicht werden, welches auf den Prozessorkern betrieben wird. Auf diese Weise kann eine besonders einfache Ansteuerung der einzelnen Prozessorkerne, welche in einem Netzwerk verschaltet sind, ermöglicht werden. Auch sind derartige Steuereinheiten zum Steuern von Mehrkernprozessoren bekannt, so dass dies hier einfach und ohne großen Aufwand realisiert werden kann, ohne dass aufwendige und kostspielige Umbauten beziehungsweise Hardware- oder Software-Änderungen vonnöten wären. Folglich kann das Steuergerät ausgebildet sein, die Funktion des Herunterfahrens der auf den Prozessorkernen des Mehrkernprozessors ausgeführten Programme entsprechend der Zeitkritizität der durch die Prozessorkerne bereitgestellten Funktionen, um einen synchronen Initialisierungsprozess durchführen zu können, einfach und ohne großen Aufwand zu realisieren. Insbesondere kann die Steuereinheit des ersten Mittels dabei derart ausgebildet sein, die Programme welche Funktionen der ersten Gruppe realisieren, das heißt Funktionen mit geringer Zeitkritizität, unmittelbar herunterzufahren sowie die Funktionen der zweiten Gruppe, das heißt die Funktionen mit mittlerer Zeitkritizität, erneut auszuführen, falls diese zum Zeitpunkt des Detektierens der Zustandsänderung erneut aktiviert werden und anschließend die entsprechenden Programme herunterzufahren sowie andernfalls die Programme, welche die Funktionen der zweiten Gruppe realisieren, ebenfalls unmittelbar herunterzufahren. Dabei kann die Steuereinheit weiter derart ausgebildet sein, die Funktionen der dritten Gruppe, das heißt Funktionen mit hoher Zeitkritizität, noch einmal auszuführen und anschließend die entsprechenden Programme herunterzufahren. Hierdurch kann in einfacher Weise vorteilhaft gewährleistet werden, dass die Funktionen des Steuergerätes, welche unmittelbar oder innerhalb eines kurzen Zeitraums ausgeführt werden müssen, beispielsweise ein Kommunikationstask oder eine Ventilhubsteuerung, durch den Initialisierungsprozess nicht beeinträchtigt werden.

Die Steuereinheit kann dabei weiter derart ausgebildet sein, ein Steuersignal zum Überführen der jeweiligen Programme von einem Betriebszustand in einen Ruhezustand zu erzeugen. So ist es bekannt die Prozessorkerne eines Mehrkernprozessors, welche aktuell nicht zum Ansteuern der Betriebskomponenten insbesondere eines Kraftfahrzeuges benötigt werden, in einen Ruhemodus beziehungsweise in einen Stand-by-Modus zu schalten, in welchem diese einen geringeren Energie- beziehungsweise Leistungsbedarf aufweisen, so dass Energie eingespart werden kann. Folglich kann diese Funktion wiederum durch für gewöhnliche Mehrkernprozessoren bekannte Steuereinheiten realisiert werden, ohne dass aufwendige und kostspielige Umbauten beziehungsweise Hardwareoder Software-Änderungen vonnöten wären. Dadurch, dass die Steuereinheit ausgebildet ist, die auf den Prozessorkernen ausgeführten Programme nicht ausschalten zu müssen, sondern in einen Ruhezustand zu überführen, kann die Zeitdauer, bis auf die Funktionen des Steuergerätes nach einem abgeschlossenen Initialisierungsprozess wieder zugegriffen werden kann, verkürzt werden, was sich beispielsweise bei Funktionen, welche unmittelbar oder innerhalb eines kurzen Zeitraums ausgeführt werden müssen, als vorteilhaft erweist, so dass weiter gewährleistet wird, dass die Funktionen des Steuergerätes durch den Initialisierungsprozess nicht beeinträchtigt werden.

Auch kann das dritte Mittel eine zweite Steuereinheit umfassen, welche ausgebildet ist, ein Steuersignal zum Einschalten der jeweiligen auf den Prozessorkernen ausgeführten Programme zu erzeugen. Da, wie oben beschrieben, derartige Steuereinheiten für gewöhnliche Mehrkernprozessoren bekannt sind, kann die Funktion des Wiederhochfahrens der Steuergeräte nach abgeschlossenem Initialisierungsprozess hierbei wiederum einfach und ohne großen Aufwand realisiert werden, ohne dass aufwendige und kostspielige Umbauten beziehungsweise Hardware- oder Software-Änderungen vonnöten wären. Insbesondere kann die zweite Steuereinheit dabei derart ausgebildet sein, zunächst die Programme welche Funktionen der dritten Gruppe realisieren, das heißt Funktionen mit hoher Zeitkritizität, wiederhochzufahren und anschließend die Programme welche Funktionen der ersten und zweiten Gruppe realisieren. Dadurch kann weiter gewährleistet werden, dass auf die Funktionen des Steuergerätes, welche unmittelbar oder innerhalb eines kurzen Zeitraums ausgeführt werden müssen, unmittelbar nach abgeschlossenem Initialisierungsprozess wieder zugegriffen werden kann, beispielsweise für ein Kommunikationstask oder eine Ventilhubsteuerung, so dass weiter gewährleistet werden kann, dass diese Funktionen durch den Initialisierungsprozess nicht beeinträchtigt werden.

Mit einer weiteren Ausführungsform der Erfindung wird zudem auch ein Kraftfahrzeug angegeben, welches wenigstens ein oben beschriebenes Steuergerät sowie eine Vorrichtung zum Detektieren einer Zustandsänderung einer Einrichtung des Kraftfahrzeugs aufweist.

Ein derartiges Kraftfahrzeug hat den Vorteil, dass dieses ein-fach ausgestaltet ist, wobei der Initialisierungsprozess von einem oder mehreren Steuergeräten des Kraftfahrzeuges bei einer Zustandsänderung einer Einrichtung des Kraftfahrzeuges erheblich verbessert werden kann. Dabei wird wenigstens ein Steuergerät durch einen Mehrkernprozessor gebildet, das heißt ein üblicherweise in einem Kraftfahrzeug vorhandenes Steuergerät durch die Prozessorkerne eines Mehrkernprozessors ersetzt, welche die Funktionen des Steuergerätes bereitstellen. Hierbei werden für gewöhnlich auf jedem Prozessorkern eines Mehrkernprozessors Teile eines entsprechenden Steuerprogramms betrieben, mit welchen Eingangsgrößen erfasst werden, die von Sensoren des Kraftfahrzeuges bereitgestellt oder beispielsweise durch Eingabe eines Benutzers des Kraftfahrzeuges erzeugt werden. Anhand dieser Eingangsgröße ermittelt das Steuerprogramm dann eine Ausgangsgröße, mittels welcher eine Betriebskomponente des Kraftfahrzeuges angesteuert werden kann. Da das Kraftfahrzeug dabei derart ausgebildet ist, einen Initialisierungsprozess auf allen Prozessorkernen synchron durchzuführen, während die durch die einzelnen Prozessorkerne realisierten Funktionen des Steuergerätes heruntergefahren werden, kann gewährleistet werden, dass die Initialisierungsfunktionen auf den einzelnen Prozessorkernen des Mehrkernprozessors parallelisiert werden. Dabei kann die Zeitdauer, über welche derartige Initialisierungsfunktionen insgesamt ausgeführt werden, und insgesamt die Zeitdauer, bis zu welcher alle Prozessorkerne des wenigstens einen Steuergerätes eine Zustandsänderung einer Einrichtung verarbeitet haben und auf diese entsprechend reagieren können, vereinheitlicht und erheblich verkürzt werden. So wird gewährleistet, dass unterschiedliche Funktionen desselben Steuergerätes oder auch weiterer Steuergeräte zum selben Zeitpunkt keine unterschiedlichen Eingangsgrößen derselben Betriebsgröße des Kraftfahrzeuges auswerten, wodurch Kollisionen der einzelnen Funktionen des oder der Steuergeräte untereinander vorgebeugt werden kann.

Da das wenigstens eine Steuergerät weiter ausgebildet ist, das Herunterfahren der einzelnen auf den Prozessorkernen ausgeführten Programme dabei entsprechend einer Zeitkritizität der durch die Prozessorkerne bereitgestellten Funktionen zu steuern, kann weiter gewährleistet werden, dass Funktionen des Steuergerätes, welche unmittelbar oder in kurzer Zeit ausgeführt werden müssen, noch aktiviert werden können, bevor das entsprechende Programm heruntergefahren wird. So arbeiten Steuergeräte in diskreten Zeitintervallen. Die Länge eines solchen Zeitintervalls kann dabei fest oder ereignisabhängig sein. Die Aufgabe der Steuergeräte liegt dabei darin, alle Berechnungs- und Regelaufgaben innerhalb der zur Verfügung stehenden Zeit zu erledigen.

Weiter kann durch das Parallelisieren der Initialisierungs-funktionen der Bedarf an Speicherplatz in einem Puffer, das heißt in einem Zwischenspeicher des Mehrkernprozessors, in welchem Variablen oder Funktionen abgelegt sind, die bei einer Zustandsänderung einer Einrichtung des Kraftfahrzeuges überarbeitet beziehungsweise upgedatet werden müssen, reduziert werden, so dass auch die Anforderungen in Bezug auf Rechenzeit als auch auf Speicherplatzanforderungen optimiert werden können.

Gemäß einer Ausführungsform kann die Vorrichtung zum Detektieren einer Zustandsänderung einer Einrichtung des Kraftfahrzeuges dabei eine Überwachungsschaltung mit wenigstens einem Sensor aufweisen. Derartige Überwachungsschaltungen zum Detektieren einer Zustandsänderung einer Einrichtung eines Kraftfahrzeuges sind für gewöhnliche Kraftfahrzeuge bekannt, so dass dieses hier einfach realisiert werden kann, ohne dass aufwendige und kostspielige Umbauten beziehungsweise Hardware- oder Software-Änderungen vonnöten wären.

Der Sensor kann dabei zur Überwachung der Position eines Zündschalters des Kraftfahrzeuges ausgebildet sein. Derartige Zündschalter von gewöhnlichen Kraftfahrzeugen sind als elektrische Kombinationskontakte ausgebildet und dienen dazu, die elektrischen Funktionen einer elektrischen Zündung des Kraftfahrzeuges zu schalten. Hierdurch können in vorteilhafter Weise Zustandsänderungen eines Motors des Kraftfahrzeuges detektiert werden, insbesondere ob dieser gestartet beziehungsweise abgeschaltet wurde. Ferner kann die Vorrichtung aber auch ausgebildet sein, die Daten,weiterer Sensoren zum Detektieren einer Zustandsänderung des Motors oder einer weiteren Einrichtung des Kraftfahrzeuges zu verwenden.

Die Prozessorkerne des Mehrkernprozessors können dabei ferner weiter an einen CAN-Datenbus des Kraftfahrzeuges angebunden sein. Durch den CAN (Controller Area Network) - Datenbus kann ein Kommunikationsverbund geschaffen werden, welcher sich aus mehreren Steuergeräten einzelner elektrischer beziehungsweise elektronischer Komponenten, das heißt Betriebskomponenten des Kraftfahrzeuges, zusammensetzt, die durch das Fahrzeugnetzwerk als Kommunikationsnetz, einen Bus, miteinander verbunden sind. So ist es üblich, jeweils verschiedene Steuergeräte zu einem Fahrzeugnetzwerk zusammenzufassen, welche über einen CAN-Bus miteinander kommunizieren. Verschiedene Fahrzeugnetzwerke können dann wiederum über Gateways miteinander verbunden werden, so dass auch Daten von den einzelnen Fahrzeugen ausgetauscht werden können. Ferner kann es sich bei dem Datenbus weiter beispielsweise auch um einen FlexRay, Ethernet, SENT oder einen PSI-5 handeln.

Zusammenfassend ist festzustellen, dass mit der vorliegenden Erfindung ein Verfahren zum Steuern eines Steuergerätes eines Kraftfahrzeuges sowie ein Steuergerät eines Kraftfahrzeuges, welches durch einen Mehrkernprozessor gebildet wird und wobei Funktionen des Steuergeräts jeweils durch einen Prozessorkern des Mehrkernprozessors bereitgestellt werden, angegeben werden, welche einfach ausgestaltet sind und mit welchen der Initialisierungsprozess bei einer Zustandsänderung einer Einrichtung des Kraftfahrzeuges erheblich verbessert werden kann.

So kann ein synchrones Verhalten des Steuergerätes gewährleistet werden und folglich die Zeitdauer eines Initialisierungsprozesses der Prozessorkerne des Mehrkernprozessors erheblich verkürzt werden, da die einzelnen Initialisierungsfunktionen der Prozessorkerne parallelisiert werden. Weiter können Kollisionen der Funktionen des Steuergerätes untereinander vermieden werden, da gewährleistet wird, dass unterschiedliche Prozessorkerne zum selben Zeitpunkt keine unterschiedlichen Eingangsgrößen derselben Betriebsgröße des Kraftfahrzeuges auswerten.

Da das Herunterfahren beziehungsweise Wiederhochfahren der auf den Prozessorkernen ausgeführten Programme dabei auf Basis der Zeitkritizität der durch die Prozessorkerne bereitgestellten Funktionen gesteuert wird, kann weiter gewährleistet werden, dass die Funktionen des Steuergerätes, insbesondere Funktionen, welche unmittelbar oder in kurzer Zeit ausgeführt werden müssen, durch den Initialisierungsprozess nicht beeinträchtigt werden.

Zudem können auch die Anforderungen in Bezug auf Rechenzeit als auch in Bezug auf die Speicherplatzanforderungen optimiert werden, da durch das Parallelisieren der Initialisierungsfunktion der Bedarf an Speicherplatz in einem Puffer, das heißt in einem Zwischenspeicher des Mehrkernprozessors, in welchem Variablen oder Funktionen abgelegt sind, die bei einer Zustandsänderung einer Einrichtung des Kraftfahrzeuges überarbeitet beziehungsweise upgedatet werden müssen, erheblich reduziert wird.

Die Erfindung wird nun anhand der beigefügten Figuren näher erläutert:
- Figur 1: zeigt eine schematische Ansicht eines Kraftfahrzeuges mit einem durch einen Mehrkernprozessor gebildeten Steuergerät;
- Figur 2: zeigt ein schematisches Blockschaltbild eines Steuergerätes eines Kraftfahrzeuges gemäß Ausführungsformen der Erfindung;
- Figur 3: zeigt ein Flussdiagramm eines Verfahrens zum Steuern eines Steuergerätes eines Kraftfahrzeuges gemäß Ausführungsformen der Erfindung.

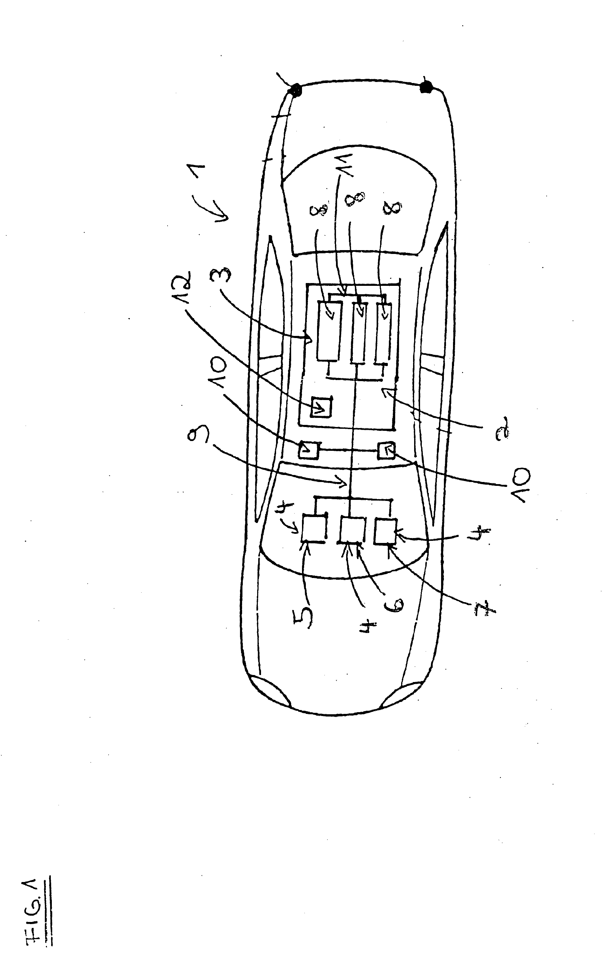

Figur 1 zeigt eine schematische Ansicht eines Kraftfahrzeuges 1 mit einem durch einen Mehrkernprozessor 2 gebildeten Steuergerät3.

Ein in Figur 1 gezeigtes Kraftfahrzeug umfasst üblicherweise eine Vielzahl von Betriebskomponenten 4. Bei den in Figur 1 gezeigten Betriebskomponenten 4 handelt es sich dabei um eine Motorsteuerung 5 des Kraftfahrzeuges 1, ein Navigationssystem 6 sowie eine Sitzverstellung 7. Ferner kann das Kraftfahrzeug 1 aber auch weitere Betriebskomponenten 4 umfassen, deren Funktion über Steuergeräte 3 des Kraftfahrzeuges 1 angesteuert und/oder geregelt werden kann.

Bei dem Kraftfahrzeug 1 gemäß Figur 1 wird das dargestellte Steuergerät 3 dabei durch einen Mehrkernprozessors 3 gebildet, welcher Prozessorkerne 8 zum Bereitstellen von Funktionen des Steuergeräts 3 umfasst. Ein Mehrkernprozessor 2 kann üblicherweise von zwei bis zu mehreren hundert Prozessorkernen 8 umfassen, wobei in Figur 1 drei Prozessorkerne 8 dargestellt sind, welche jeweils einer Funktion des Steuergeräts 3 zugeordnet sind. Ferner können aber auch mehrere Prozessorkerne 8 dazu genutzt werden, ein und dieselbe Funktion zu realisieren.

Wie Figur 1 weiter zeigt, sind ist der Mehrkernprozessors 2 dabei über einen als CAN-Bus 9 ausgebildeten Kraftfahrzeugdatenbus mit den Betriebskomponenten 4 verbunden. Ferner kann der Kraftfahrzeugdatenbus aber auch beispielsweise als FlexRay, Ethernet, SENT oder PSI-5 ausgebildet sein.

Die Prozessorkerne 8 sind dabei derart ausgebildet, insbesondere durch das Ausführen einer entsprechenden Software entsprechenden Eingangsgrößen von Einrichtungen des Kraftfahrzeuges 1 zu empfangen. Diese Eingangsgrößen werden durch Sensoren 10 des Kraftfahrzeuges 1 oder beispielsweise durch eine Eingabe eines Benutzers des Kraftfahrzeuges 1 zur Verfügung gestellt und über den CAN-Bus 9 an die jeweiligen Prozessorkerne 8 übertragen. Dabei wird auf den Prozessorkernen 8 ein entsprechendes Steuerprogramm ausgeführt, welches für die erfassten Eingangsgrößen Ausgangsgrößen errechnet und auf Basis der jeweiligen Ausgangsgröße ein Steuersignal erzeugt, mit welchem eine Funktion des Steuergeräts 3 realisiert werden kann.

Gemäß Figur 1 sind die Prozessorkerne 8 des Mehrkernprozessors 2 dabei weiter über einen Prozessordatenbus 11 untereinander verbunden. Über den Prozessordatenbus 11 können die Prozessorkerne 8 Datenwerte auslesen oder Datenwerte zwischen den einzelnen Prozessorkernen 8 übertragen beziehungsweise austauschen.

Auch ist eine Steuereinheit 12 zu erkennen, mittels welcher ein Steuersignal erzeugbar ist, das bewirkt, dass ein Steuerprogramm zum Ansteuern der jeweiligen Betriebskomponenten 4 zum Ablauf gebracht wird. Die Steuereinheit 12 ist dabei derart ausgebildet, ein Steuersignal zu erzeugen, mit welchem die auf den einzelnen Prozessorkern 2 ausgeführten Steuerprogramme aktiviert beziehungsweise deaktiviert werden können. Weiter ist die Steuereinheit 12 derart ausgebildet, einen Prozessorkern 2 von einem Betriebsmodus in einen Ruhemodus beziehungsweise Stand-by-Modus zu schalten.

Als nachteilig erweist sich bei derartigen Mehrkernprozessoren 2 jedoch, dass Zustandsänderungen einer Einrichtung des Kraftfahrzeuges 1, welche dazu führen, das Daten neu eingesetzt, das heißt Variablen neu initialisiert werden müssen, von den einzelnen Prozessorkernen 8 des Mehrkernprozessors 2 zu unterschiedlichen Zeiten registriert werden können. Auch können Situationen auftreten, das ein Steuerprogram eines Prozessorkerns 8 abhängig von der Ausgangsgröße eines anderen Prozessorkerns 8 ist und folglich erst zeitlich verzögert auf die Zustandsänderung reagieren kann, was dazu führen kann, dass unterschiedliche Funktionen desselben Steuergerätes 3 zum selben Zeitpunkt unterschiedliche Eingangsgrößen derselben Komponente des Kraftfahrzeuges 1 auswerten können, was wiederum zu kritischen Situationen führen kann.

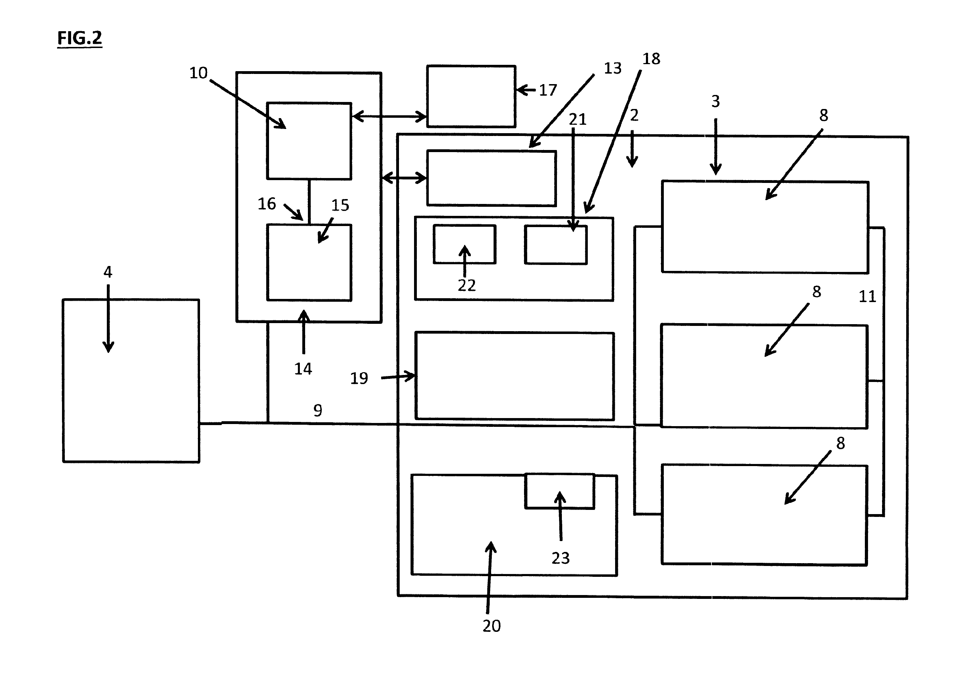

Figur 2 zeigt ein schematisches Blockschaltbild eines Steuergerätes 3 gemäß Ausführungsformen der Erfindung. Komponenten und Bauteile mit gleicher Konstruktion oder Funktion wie in Figur 1 tragen dieselben Bezugszeichen und werden nicht extra erörtert.

Figur 2 zeigt dabei wiederum ein Steuergerät 3 zum Ansteuern einer Betriebskomponente 4 eines Kraftfahrzeuges, wobei das Steuergerät 3 durch einen Mehrkernprozessor 2 gebildet wird und Funktionen des Steuergeräts 3 jeweils durch einen Prozessorkern 8 des Mehrkernprozessors 2 bereitgestellt und durch auf den Prozessorkernen 8 ausgeführte Funktionen realisiert werden.

Wie Figur 2 weiter zeigt, umfasst das Steuergerät 3 eine Empfangseinheit 13 zum Empfangen von Informationen über eine Zustandsänderung einer Einrichtung des Kraftfahrzeuges.

Die Empfangseinheit 13 erhält dabei Informationen von einer Vorrichtung 14 zum Detektieren einer Zustandsänderung einer Einrichtung des Kraftfahrzeuges.

Wie zu erkennen ist, weist die Vorrichtung 14 zum Detektieren einer Zustandsänderung einer Einrichtung des Kraftfahrzeuges 1 dabei eine Überwachungsschaltung 15 mit einem Eingang 16 auf, welcher mit einem Sensor 10 zum Detektieren der Zustandsänderung verbunden ist.

Gemäß den Ausführungsformen der Figur 2 ist der Sensor 10 dabei ausgebildet, die Position eines Zündschalters 17 des Kraftfahrzeuges zu überwachen. Derartige Zündschalter 17 von gewöhnlichen Kraftfahrzeugen sind als elektrische Kombinationskontakte ausgebildet und dienen dazu, die elektrischen Funktionen einer elektrischen Zündung des Kraftfahrzeuges zu schalten. Hierdurch können in vorteilhafter Weise Zustandsänderungen eines in Figur 2 nicht gezeigten Motors des Kraftfahrzeuges 1 detektiert werden, insbesondere ob dieser gestartet beziehungsweise abgeschaltet wurde. Ferner kann die Vorrichtung 14 aber auch ausgebildet sein, die Daten weiterer Sensoren 10 zum Detektieren einer Zustandsänderung des Motors oder einer weiteren Einrichtung des Kraftfahrzeuges 1 zu verarbeiten.

Wie weiter zu erkennen ist, umfasst das dargestellte Steuergerät 3 weiter ein erstes Mittel 18 zum Herunterfahren der auf den Prozessorkernen 8 ausgeführten Programme entsprechend einer Zeitkritizität der durch die Prozessorkerne 8 bereitgestellten Funktionen, falls Informationen über eine Zustandsänderung einer Einrichtung des Kraftfahrzeuges empfangen wurden, ein zweites Mittel 19 zum synchronen Durchführen eines Initialisierungsprozesses auf Basis der detektierten Zustandsänderung auf allen Prozessorkernen 8 sowie ein drittes Mittel 20 zum Wiederhochfahren der auf den Prozessorkernen 8 ausgeführten Programme nach Beendigung des Initialisierungsprozesses. Hierdurch können die auf einzelnen Prozessorkernen 8 ausgeführten Initialisierungsfunktionen parallelisiert werden, wodurch der Gefahr, dass unterschiedliche Funktionen desselben Steuergerätes 3 zum selben Zeitpunkt unterschiedliche Eingangsgrößen derselben Komponente verarbeiten und somit einer möglichen Kollision der Funktionen vorgebeugt werden kann. Das erste Mittel 18, das zweite Mittel 19 und das dritte Mittel 20 sind in Figur 2 als eigenständige Komponenten gezeigt. Ferner können diese Mittel 18, 19, 20 aber auch durch eine einzige Komponente realisiert werden. Gemäß den Ausführungsformen der Figur 2 werden das erste Mittel 18, das zweite Mittel 19 sowie das dritte Mittel 20 dabei weiter als Programmteile, welche auf den Prozessorkernen 8 zur Ausführung kommen, realisiert. Ferner können die Funktionen der einzelnen Mittel 18,19,20 aber auch durch weitere Softwareund/oder Hardwarekomponenten realisiert werden.

Wie weiter zu erkennen ist, umfasst das erste Mittel 18 einen Speicher 21, in welchem Daten über die Zeitkritizität der Funktionen welche durch die Prozessorkerne 8 des Mehrkernprozessors 2 bereitgestellt werden, hinterlegt sind. Die Signale von Funktionen Steuergeräten eines Kraftfahrzeuges werden für gewöhnlich in zeitdiskrete, wertediskrete oder winkelsynchrone Signale unterteilt, wobei die Signale bis hin zu einem nächsten Abtastzyklus einer Eingangsgröße konstant gehalten werden. Weiter arbeiten die Steuergeräte in diskreten Zeitintervallen. Die Länge eines solchen Zeitintervalls kann fest, beispielsweise 10 Millisekunden, oder ereignisabhängig, beispielsweise eine Motordrehung, definiert sein. Die Aufgabe der Steuergeräte liegt nun darin, alle Berechnungs- und Regelaufgaben innerhalb des jeweiligen Zeitintervalls zu erledigen. Hierdurch kann in einfacher Weise vorteilhaft gewährleistet werden, dass die Funktionen des Steuergerätes 3, welche unmittelbar oder innerhalb eines kurzen Zeitraums ausgeführt werden müssen, erneut aktiviert werden, bevor die entsprechenden Programme heruntergefahren werden, und folglich durch den Initialisierungsprozess nicht beeinträchtigt werden.

Gemäß den Ausführungsformen der Figur 2, sind die durch die Prozessorkerne 8 bereitgestellten Funktionen dabei gruppenweise, entsprechend ihrer Zeitkritizität unterteilt und abgespeichert, nämlich in eine erste Gruppe mit geringer Zeitkritizität, eine zweite Gruppe mit mittlerer Zeitkritizität und eine dritte Gruppe mit hoher Zeitkritizität.

Auch umfasst das dargestellte erste Mittel 18 eine erste Steuereinheit 22, welche wiederum ausgebildet ist, ein Steuersignal zum Ausschalten der jeweiligen auf den Prozessorkernen 8 ausgeführten Programme entsprechend der Zeitkritizität der durch die Prozessorkerne 8 bereitgestellten Funktionen zu erzeugen.

Gemäß den Ausführungsformen der Figur 2 ist die erste Steuereinheit 22 dabei weiter derart ausgebildet, ein Steuersignal zum Überführen der auf den Prozessorkernen 8 ausgeführten Programme von einem Betriebszustand in einen Ruhezustand zu erzeugen. Die erste Steuereinheit 22 des ersten Mittels 18 ist dabei derart ausgebildet, die Programme welche Funktionen der ersten Gruppe realisieren, das heißt Funktionen mit geringer Zeitkritizität, unmittelbar herunterzufahren sowie die Funktionen der zweiten Gruppe, das heißt die Funktionen mit mittlerer Zeitkritizität, erneut auszuführen, falls diese zum Zeitpunkt des Detektierens der Zustandsänderung erneut aktiviert werden und anschließend die entsprechenden Programme herunterzufahren sowie andernfalls die Programme welche die Funktionen der zweiten Gruppe realisieren ebenfalls unmittelbar herunterzufahren. Auch ist die erste Steuereinheit 22 weiter derart ausgebildet, die Funktionen der dritten Gruppe, das heißt Funktionen mit hoher Zeitkritizität, noch einmal auszuführen und anschließend die entsprechenden Programme herunterzufahren.

Auch zeigt Figur 2, dass das dritte Mittel 20 eine zweite Steuereinheit 23 umfasst, welche ausgebildet ist, ein Steuersignal zum Einschalten der auf den Prozessorkernen 8 ausgeführten Programme zu erzeugen. Gemäß den Ausführungsformen der Figur 2 ist die zweite Steuereinheit 23 dabei derart ausgebildet, zunächst die Programme welche Funktionen der dritten Gruppe realisieren wiederhochzufahren und anschließend die Programme welche Funktionen der ersten und zweiten Gruppe realisieren. Hierdurch kann weiter gewährleistet werden, dass die Funktionen des Steuergerätes, insbesondere die Funktionen, welche unmittelbar beziehungsweise in kurzer Zeit ausgeführt werden müssen, durch den Initialisierungsprozess nicht beeinträchtigt werden.

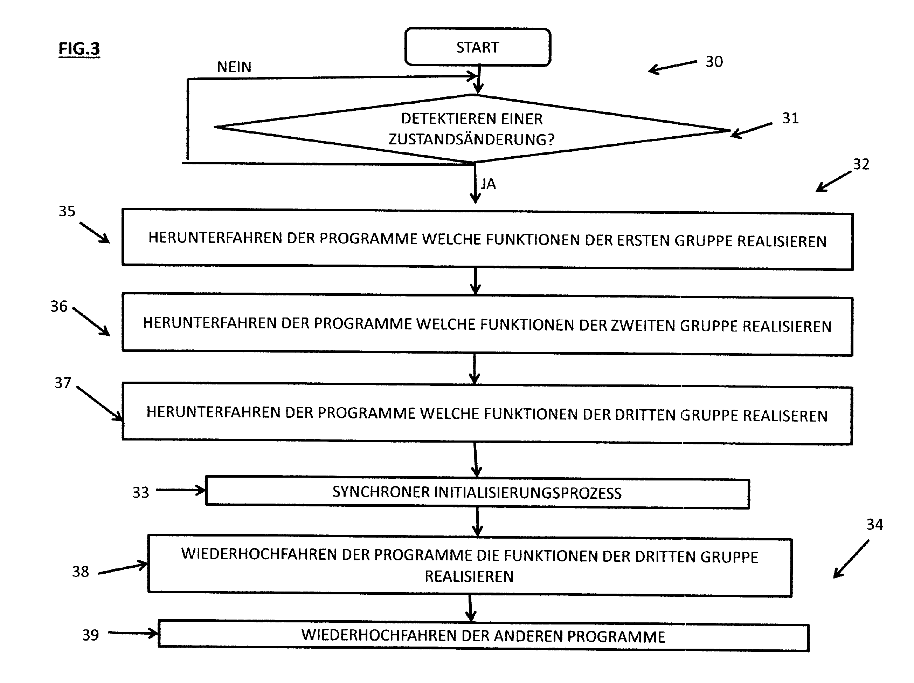

Figur 3 zeigt ein Flussdiagramm eines Verfahrens 30 zum Steuern eines Steuergerätes eines Kraftfahrzeuges, welches durch einen Mehrkernprozessors gebildet wird und wobei Funktionen des Steuergerätes jeweils durch Prozessorkerne des Mehrkernprozessors bereitgestellt und durch auf den Prozessorkernen ausgeführte Programme realisiert werden, gemäß Ausführungsformen der Erfindung.

Wie Figur 3 zeigt, weist das Verfahren 30 dabei folgende Schritte auf: So wird in einem ersten Schritt 31 detektiert, ob eine Zustandsänderung einer Einrichtung des Kraftfahrzeuges vorliegt und werden, falls eine Zustandsänderung einer Einrichtung des Kraftfahrzeuges vorliegt, in einem folgenden Schritt 32 die auf den Prozessorkernen ausgeführten Programme entsprechend einer Zeitkritizität der durch die Prozessorkerne bereitgestellten Funktionen heruntergefahren. Anschließend wird in einem Schritt 33 ein Initialisierungsprozess auf Basis der detektierten Zustandsänderungen auf allen Prozessorkernen synchron durchgeführt. In einem abschließenden Schritt 34 werden die auf den Prozessorkernen ausgeführten Programme wieder hochgefahren.

Gemäß den Ausführungsformen der Figur 3 umfasst der Schritt 31 des Detektierens einer Zustandsänderung einer Einrichtung des Kraftfahrzeuges dabei ein Detektieren eines Betätigens eines Zündschalters des Kraftfahrzeuges. Hierdurch können in vorteilhafter Weise Zustandsänderungen eines Motors des Kraftfahrzeuges detektiert werden, insbesondere ob dieser gestartet beziehungsweise abgeschaltet wurde. Ferner können aber auch die Daten weiterer Sensoren zum Detektieren einer Zustandsänderung des Motors oder einer weiteren Einrichtung des Kraftfahrzeuges verwendet werden.

Gemäß Figur 3 wird der Schritt 31 des Detektierens einer Zustandsänderung einer Einrichtung des Kraftfahrzeuges dabei wiederholt ausgeführt, falls keine Zustandsänderung einer Einrichtung des Kraftfahrzeuges detektiert wurde. Falls eine Zustandsänderung einer Einrichtung des Kraftfahrzeuges detektiert wurde, fährt das Verfahren mit den folgenden Schritten 32, 33, 34 fort.

Gemäß den Ausführungsformen der Figur 3 umfasst der Schritt 32 des Herunterfahrens der auf den Prozessorkernen ausgeführten Programme dabei ein Verzögern des Ausführens der Funktionen welche durch die Prozessorkerne bereitgestellt werden und welche aktiviert werden. Das Ausführen der Funktionen des Steuergerätes wird dabei bis zu einem Abschluss des Initialisierungsprozesses verzögert, so dass die Initialisierungsfunktion auf den einzelnen Prozessorkern des Mehrkernprozessors parallelisiert werden können.

Weiter sind die durch die Prozessorkerne bereitgestellten Funktionen dabei entsprechend ihrer Zeitkritizität in eine erste Gruppe mit geringer Zeitkritizität, eine zweite Gruppe mit mittlerer Zeitkritizität und eine dritte Gruppe mit hoher Zeitkritizität unterteilt.

Wie Figur 3 zeigt, weist der Schritt 32 des Herunterfahrens der auf den Prozessorkernen ausgeführten Programme entsprechend der Zeitkritizität der durch die Prozessorkerne bereitgestellten Funktionen dabei weiter folgende Schritte auf:

So wird zunächst detektiert, ob ein Programm eine Funktion der ersten Gruppe realisiert. Falls detektiert wird, dass ein Programm eine Funktion der ersten Gruppe realisiert, wird dieses Programm in einem Schritt 35 unmittelbar heruntergefahren.

Wird detektiert, dass ein Programm keine Funktion der ersten Gruppe realisiert, so wird weiter detektiert, ob das Programm eine Funktion der zweiten Gruppe realisiert. Wird dabei detektiert, dass das Programm eine Funktion der zweiten Gruppe realisiert, so wird anschließend überprüft, ob diese Funktion zum Zeitpunkt des Detektierens der Zustandsänderung einer Einrichtung des Kraftfahrzeuges erneut aktiviert wurde. Wenn ermittelt wird, dass diese Funktion zum Zeitpunkt des Detektierens der Zustandsänderung erneut aktiviert wurde, so wird die Funktion erneut aktiviert und das entsprechende Programm in einem Schritt 36 anschließend heruntergefahren. Wird ermittelt, dass die Funktion nicht zum Zeitpunkt des Detektierens der Zustandsänderung erneut aktiviert wurde, so wird das entsprechende Programm in dem Schritt 36 unmittelbar heruntergefahren.

Wird wiederum detektiert, dass es sich bei der Funktion nicht um eine Funktion der zweiten Gruppe handelt, ein entsprechendes Programm folglich eine Funktion der dritten Gruppe realisiert, wird diese erneut aktiviert und das entsprechende Programm anschließend in einem Schritt 37 heruntergefahren.

Hierdurch kann in einfacher Weise und vorteilhaft gewährleistet werden, dass die Funktionen des Steuergerätes, welche unmittelbar oder innerhalb eines kurzen Zeitraums ausgeführt werden müssen, erneut ausgeführt werden, bevor die entsprechenden Programme heruntergefahren werden, und folglich durch den Initialisierungsprozess nicht beeinträchtigt werden.

Wie Figur 3 weiter zeigt, weist der Schritt 34 des Wiederhochfahrens der auf den Prozessorkernen ausgeführten Programme weiter folgende Schritte auf: So werden in einem Schritt 38 zunächst die Programme, welche Funktionen der dritten Gruppe realisieren, wiederhochgefahren und anschließend in einem Schritt 39 die Programme, welche Funktionen der ersten und der zweiten Gruppe realisieren, wiederhochgefahren. Hierdurch wird weiter erreicht, dass die Funktionen des Steuergerätes, welche unmittelbar oder innerhalb eines kurzen Zeitraums ausgeführt werden müssen, beispielsweise für einen Kommunikationstask oder einer Ventilhubsteuerung, unmittelbar nach Beendigung des Initialisierungsprozesses wieder zur Verfügung stehen, so dass weiter gewährleistet werden kann, dass diese durch den Initialisierungsprozess nicht beeinträchtigt werden.

## Patentansprüche

1. Verfahren zum Steuern eines Steuergerätes eines Kraftfahrzeuges, welches durch einen Mehrkernprozessor gebildet wird und wobei Funktionen des Steuergeräts jeweils durch einen Prozessorkern des Mehrkernkompressors bereitgestellt und durch auf den Prozessorkernen ausgeführte Programme realisiert werden, wobei das Verfahren (30) folgende Schritte aufweist:
- Detektieren einer Zustandsänderung einer Einrichtung des Kraftfahrzeuges (31);
- Herunterfahren der auf den Prozessorkernen ausgeführten Programme entsprechend einer Zeitkritizität der durch die Prozessorkerne des Mehrkernprozessors bereitgestellten Funktionen (32) ;
- Synchrones Durchführen eines Initialisierungsprozesses auf Basis der detektierten Zustandsänderung auf allen Prozessorkernen (33);
- Wiederhochfahren der auf den Prozessorkernen ausgeführten Programme (34).

2. Verfahren nach Anspruch 1, wobei der Schritt des Detektierens einer Zustandsänderung einer Einrichtung des Kraftfahrzeuges (31) ein Detektieren eines Betätigens eines Zündschalters des Kraftfahrzeuges umfasst.

3. Verfahren nach Anspruch 1 oder 2, wobei der Schritt des Herunterfahrens der auf den Prozessorkernen ausgeführten Programme (32) ein Verzögern des Ausführens der Funktionen, welche durch die jeweiligen Prozessorkerne bereitgestellt und welche aktiviert werden, umfasst.

4. Verfahren nach einem der Ansprüche 1 bis 3, wobei die durch die Prozessorkerne bereitgestellten Funktionen entsprechend ihrer Zeitkritizität in eine erste Gruppe mit geringer Zeitkritizität, eine zweite Gruppe mit mittlerer Zeitkritizität und eine dritte Gruppe mit hoher Zeitkritizität unterteilt werden.

5. Verfahren nach Anspruch 4, wobei der Schritt des Herunterfahrens der auf den Prozessorkerne ausgeführten Programme entsprechend der Zeitkritizität der durch die Prozessorkerne bereitgestellten Funktionen (32) weiter folgende Schritte aufweist:
- unmittelbares Herunterfahren der Programme, welche Funktionen der ersten Gruppe realisieren (35);
- Ausführen der Funktionen der zweiten Gruppe, falls diese zum Zeitpunkt des Detektierens der Zustandsänderung erneut aktiviert werden und anschließendes Herunterfahren der Programme, welche die erneut aktivierten Funktionen der zweiten Gruppe realisieren, andernfalls unmittelbares Herunterfahren der Programme, welche die Funktionen der zweiten Gruppe realisieren (36);
- Ausführen der Funktionen der dritten Gruppe und anschließendes Herunterfahren der Programme, welche die Funktionen der dritten Gruppe realisieren (37).

6. Verfahren nach Anspruch 4 oder 5, wobei der Schritt des Wiederhochfahrens der auf den Prozessorkernen ausgeführten Programme (34) weiter folgende Schritte aufweist:
- Wiederhochfahren der Programme, welche die Funktionen der dritten Gruppe realisieren(38);
- Anschließendes Wiederhochfahren der Programme, welche die Funktionen der ersten und der zweiten Gruppe realisieren (39).

7. Steuergerät eines Kraftfahrzeuges, welches durch einen Mehrkernprozessor (2) gebildet wird und wobei Funktionen des Steuergeräts (3) jeweils durch einen Prozessorkern (8) des Mehrkernprozessor (2) bereitgestellt und durch auf den Prozessorkernen (8) ausgeführte Funktionen realisiert werden, wobei das Steuergerät (3) eine Empfangseinheit (13) zum Empfangen von Informationen über eine Zustandsänderung einer Einrichtung des Kraftfahrzeuges (1) aufweist und wobei das Steuergerät (3) ein erstes Mittel (18) zum Herunterfahren der auf den Prozessorkernen (8) ausgeführten Programme entsprechend einer Zeitkritizität der durch die Prozessorkerne bereitgestellten Funktionen, falls eine Information über eine Zustandsänderung einer Einrichtung des Kraftfahrzeuges (1) empfangen wurde, ein zweites Mittel (19) zum synchronen Durchführen eines Initialisierungsprozesses auf Basis der empfangenen Information über die Zustandsänderung auf allen Prozessorkernen (8), sowie ein drittes Mittel (20) zum Wiederhochfahren der auf den Prozessorkernen (8) ausgeführten Programme nach Beendigung des Initialisierungsprozesses umfasst.

8. Steuergerät nach Anspruch 7, wobei die Prozessorkerne (8) des Mehrkernprozessors (2) an einen gemeinsamen Prozessordatenbus (11) gekoppelt sind, um aus dem Prozessordatenbus (11) Datenwerte auszulesen.

9. Steuergerät nach Anspruch 7 oder 8, wobei das erste Mittel (18) weiter einen Speicher (21), in welchem Daten über die Zeitkritizität der durch die Prozessorkerne (8) bereitgestellten Funktionen hinterlegt sind, umfasst.

10. Steuergerät nach einem der Ansprüche 7 bis 9, wobei das erste Mittel (18) eine Steuereinheit (22), welche ausgebildet ist, ein Steuersignal zum Ausschalten der auf den Prozessorkernen (8) ausgeführten Programme entsprechend der Zeitkritizität der durch die Prozessorkerne bereitgestellten Funktionen zu erzeugen, umfasst.

11. Steuergerät nach Anspruch 10, wobei die Steuereinheit (22) weiter ausgebildet ist, ein Steuersignal zum jeweiligen Überführen der auf den Prozessorkernen (8) ausgeführten Programme von einem Betriebszustand in einen Ruhezustand zu erzeugen.

12. Steuergerät nach einem der Ansprüche 7 bis 11, wobei das dritte Mittel (20) eine zweite Steuereinheit (23), welche ausgebildet ist, ein Steuersignal zum Einschalten der auf den Prozessorkernen (8) ausgeführten Programme zu erzeugen, umfasst.

13. Kraftfahrzeug, welches wenigstens ein Steuergerät nach einem der Ansprüche 7 bis 12 sowie eine Vorrichtung (14) zum Detektieren einer Zustandsänderung einer Einrichtung des Kraftfahrzeuges (1) aufweist.

14. Kraftfahrzeug nach Anspruch 13, wobei die Vorrichtung (14) zum Detektieren einer Zustandsänderung einer Einrichtung des Kraftfahrzeuges (1) eine Überwachungsschaltung (15) mit wenigstens einem Sensor (10) aufweist.

15. Kraftfahrzeug nach Anspruch 14, wobei der Sensor (10) zur Überwachung der Position eines Zündschalters (17) des Kraftfahrzeuges (1) ausgebildet ist.
